# EUROPÄISCHE PATENTSCHRIFT

(11) **EP 1 142 100 B1**
(45) Veröffentlichungstag und Bekanntmachung des Hinweises auf die Patenterteilung: **19.12.2007**
(21) Anmeldenummer: 99963333.2
(22) Anmeldetag: 26.11.1999
(51) Int. Cl.: H02P 6/00

(54) **ELEKTRONISCH KOMMUTIERTER MOTOR**
ELECTRONICALLY COMMUTATED MOTOR
MOTEUR A COMMUTATION ELECTRONIQUE

(30) Priorität: 08.12.1998 DE 29821770 U
(43) Veröffentlichungstag der Anmeldung: 10.10.2001
(73) Patentinhaber: ebm-papst St. Georgen GmbH & Co. KG, 78112 St. Georgen (DE)
(72) Erfinder: LUKENICH, Stefan, D-78269 Volkertshausen (DE); SCHMIDER, Fritz, D-78132 Hornberg (DE)
(86) Internationale Anmeldenummer: PCT/EP1999/009171
(87) Internationale Veröffentlichungsnummer: WO 2000/035074

(56) Entgegenhaltungen:
- EP-A- 0 669 706
- EP-A- 0 744 807
- DE-A- 4 009 184
- US-A- 5 550 446
- US-A- 5 602 452

## Beschreibung

Die Erfindung betrifft einen elektronisch kommutierten Motor. Derartige Motoren sind in großer Vielzahl bekannt.

Bei derartigen Motoren ist es wünschenswert, daß sie im Betrieb mit einem niedrigen Geräuschniveau arbeiten.

Aus der DE-A1-4 009 184 ist ein dreiphasiger elektronisch kommutierter Motor mit einem Gleichstrom-Zwischenkreis mit Strommessvorrichtung bekannt. Das Ausgangssignal der Strommessvorrichtung wird einem Stromregler zugeführt, welcher Stromwerte erfasst, die einen vorgegebenen Schwellwert überschreiten und bei Überschreiten dieses Schwellwerts ein erstes Signal erzeugen. Ferner hat dieser Motor eine Anordnung zur Erfassung von Drehzahlwerten, welche eine vorgegebene Drehzahl überschreitet. Die bekannte Anordnung erfordert eine aufwändige Zusatzvorrichtung, um bei der Kommutierung Stromspitzen zu vermeiden, welche den Rotormagneten entmagnetisieren könnten und welche von der beschriebenen Strommessvorrichtung nicht erfasst werden können.

Es ist deshalb eine Aufgabe der Erfindung, einen neuen elektronisch kommutierten Motor bereitzustellen.

Nach der Erfindung wird diese Aufgabe gelöst durch einen Motor gemäß dem Anspruch 1. Ein solcher Motor ermöglicht einerseits einen schnellen Hochlauf, und andererseits einen ruhigen Lauf bei seiner Betriebsdrehzahl, da durch die dann wirksame Strombegrenzung Stromspitzen wirkungsvoll unterdrückt werden können, was den Geräuschpegel eines solchen Motors sehr effizient senkt.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispiel, sowie aus den Unteransprüchen. Es zeigt:
- Fig. 1: ein Schaltbild einer bevorzugten Ausführungsform eines erfindungsgemäßen Motors, und
- Fig. 2: ein Schaubild zur Erläuterung des Motors der Fig. 1.

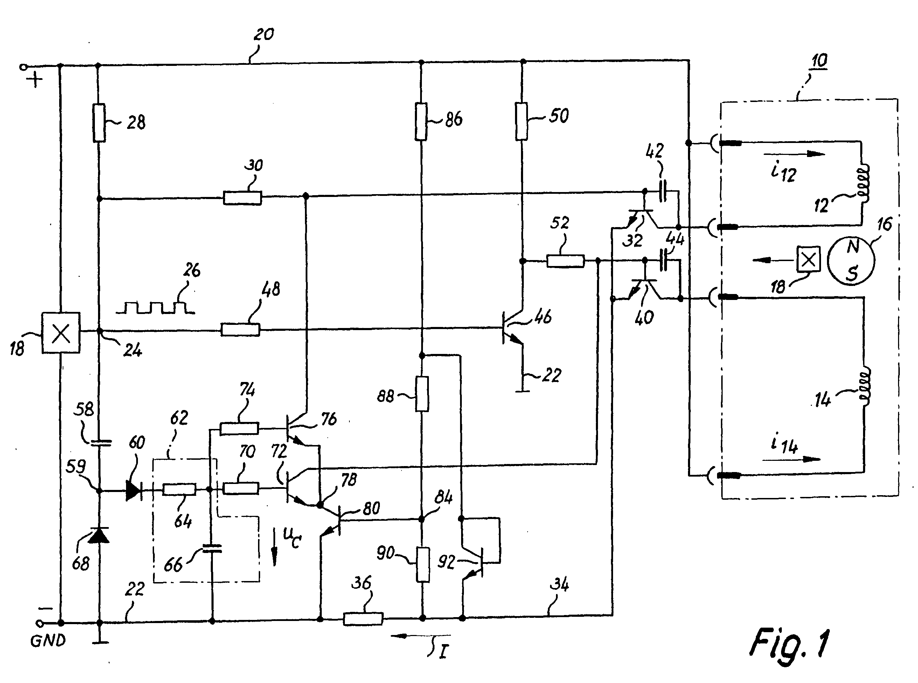

Fig. 1 zeigt schematisch rechts einen sogenannten zweipulsigen Motor 10 mit zwei Statorwicklungsphasen 12 und 14 und einem permanentmagnetischen Rotor 16, dessen Magnetfeld einen Rotorstellungssensor 18 in Gestalt eines Hall-IC steuert, der in Fig. 1 auch ganz links dargestellt ist und mit einer Plusleitung 20 und einer Minusleitung 22 verbunden ist, zwischen denen eine geeignete Gleichspannung liegt, z.B. 12, 24 oder 60 V. An einem Ausgang 24 des Hall-IC 18 liegen im Betrieb Rechteckimpulse 26 mit einer Frequenz, die der Drehzahl des Rotors 16 proportional ist. Der Ausgang 24 ist über einen sogenannten Pullup-Widerstand 28 mit der Plusleitung 20 verbunden.

Die Impulse 26 werden über einen Widerstand 30 direkt der Basis eines npn-Transistors 32 zugeführt, der den Strom i₁₂ in dem Wicklungsstrang 12 steuert, dessen einer Anschluß mit dem Kollektor des Transistors 32 und dessen anderer Anschluß mit der Plusleitung 20 verbunden ist. Der Emitter des Transistors 32 ist mit einem Leitungsabschnitt 34 verbunden, der über einen niederohmigen Meßwiderstand 36 mit der Minusleitung 22 verbunden ist. Der Meßwiderstand 36 dient als Sensorglied für den Motorstrom I.

Der andere Wicklungsstrang 14 wird von einem npn-Transistor 40 gesteuert. Hierzu ist sein einer Anschluß mit dem Kollektor des Transistors 40 verbunden, und sein anderer Anschluß mit der Plusleitung 20. Der Emitter des Transistors 40 ist mit dem Leitungsabschnitt 34 verbunden.

Zwischen Kollektor und Basis des Transistors 32 ist ein Millerkondensator 42 angeordnet, und zwischen Kollektor und Basis des Transistors 40 ein Millerkondensator 44. Wenn z.B. der Transistor 32 eingeschaltet wird, verlangsamt der Millerkondensator 42 den Stromanstieg, und wenn dieser Transistor abgeschaltet wird, verlangsamt der Millerkondensator 42 den Stromabfall. Dasselbe gilt für den Transistor 40. Hierdurch werden die Motorgeräusche bei der Kommutierung entsprechend verringert.

Zur Ansteuerung des Transistors 40 dient ein npn-Phasenumkehrtransistor 46, dessen Emitter mit der Minusleitung 22 verbunden ist, dessen Basis über einen Widerstand 48 mit dem Knotenpunkt 24 verbunden ist, und dessen Kollektor über einen Widerstand 50 mit der Plusleitung 20 und über einen Widerstand 52 mit der Basis des Transistors 40 verbunden ist.

Wenn also das Potential am Knotenpunkt 24 hoch ist, wird über den Widerstand 30 der Transistor 32 eingeschaltet, und der Wicklungsstrang 12 erhält Strom, wobei der Wicklungsstrang 14 stromlos ist, weil der Transistor 46 leitend ist und dadurch den Transistor 40 sperrt.

Ist umgekehrt das Potential am Knotenpunkt 24 niedrig, so werden die Transistoren 32 und 46 gesperrt. Über die Widerstände 50 und 52 erhält die Basis des Transistors 40 einen Strom, der diesen Transistor einschaltet, so daß nun der Wicklungsstrang 14 Strom erhält.

Die Wicklungsstränge 12 und 14 erhalten also alternierende Stromimpulse, entsprechend der Stellung des Rotors 16, wie das dem Fachmann bekannt ist. Man nennt das einen zweipulsigen Motor.

Bei Erreichen einer vorgegebenen Drehzahl soll der Strom in den Wicklungsphasen 12, 14 reduziert werden, damit sich der Rotor 16 nicht zu schnell dreht.

Hierzu werden die Rechteckimpulse 26 über einen als Differenzierglied wirkenden Kondensator 58, einen Knotenpunkt 59 und eine erste Diode 60 einem Integrierglied 62 zugeführt, das einen Widerstand 64 und einen Kondensator 66 aufweist, vgl. Fig. 1. Eine zweite Diode 68 ist zwischen der Minusleitung 22 und dem Knotenpunkt 59 angeordnet, wobei ihre Kathode an den Knotenpunkt 59 angeschlossen ist.

Mit zunehmender Drehzahl wird also der Kondensator 66 zunehmend aufgeladen, d.h. die Spannung u_{C} an ihm stellt ein Maß für die Drehzahl des Rotors 16 dar.

Die Spannung u_{C} wird über einen Widerstand 70 der Basis eines npn-Transistors 72 zugeführt, und über einen Widerstand 74 der Basis eines npn-Transistors 76. Die Emitter beider Transistoren sind mit einem Knotenpunkt 78 verbunden, an den auch der Kollektor eines npn-Transistors 80 angeschlossen ist, dessen Emitter mit der Minusleitung 22 verbunden ist.

Der Kollektor des Transistors 76 ist mit der Basis des Transistors 32 verbunden, der Kollektor des Transistors 72 mit der Basis des Transistors 40.

Sind also die beiden Transistoren 76 und 80 leitend, so wird der Basisstrom des Transistors 32 reduziert, so daß der Transistor 32 weniger stark leitend wird.

Sind die Transistoren 72 und 80 leitend, so wird der Basisstrom des Transistors 40 reduziert, so daß dieser weniger stark leitend wird.

Die Basis des Transistors 80 ist an einem Knotenpunkt 84 angeschlossen, dem über einen Spannungsteiler aus drei Widerständen 86 (an der Plusleitung 20), 88 und 90 (am Leitungsabschnitt 34) ein bestimmtes Potential vorgegeben wird. Hierzu ist parallel zu den Widerständen 88 und 90 eine Diode 92 geschaltet, um die Spannung an diesen beiden Widerständen konstantzuhalten. Die Diode 92 ist ebenso wie der Widerstand 90 an den Leitungsabschnitt 34 angeschlossen.

Wie bereits beschrieben, liegt zwischen dem Leitungsabschnitt 34 und der Minusleitung 22 der Meßwiderstand 36, der vom Motorstrom I durchflossen wird. Die Spannung am Widerstand 90 ist nun so gewählt, daß sie allein nicht ausreicht, um den Transistor 80 leitend zu machen. Steigt jedoch der Strom I über einen vorgegebenen Wert hinaus an, so entsteht am Widerstand 36 ein Spannungsabfall, der zusammen mit der Spannung am Widerstand 90 ausreicht, um den Transistor 80 leitend zu machen, wie das für eine Strombegrenzung erforderlich ist.

Wie man aber unschwer erkennt, müssen zusätzlich auch die Transistoren 72, 76 leitend sein, damit eine Strombegrenzung erfolgen kann. Und diese Transistoren 72, 76 werden nur dann leitend, wenn die Drehzahl und damit die Spannung u_{C} hoch genug ist.

Die Strombegrenzung wird also erst dann wirksam, wenn der Motor eine vorgegebene Drehzahl und damit eine vorgegebene Spannung u_{C} erreicht hat.

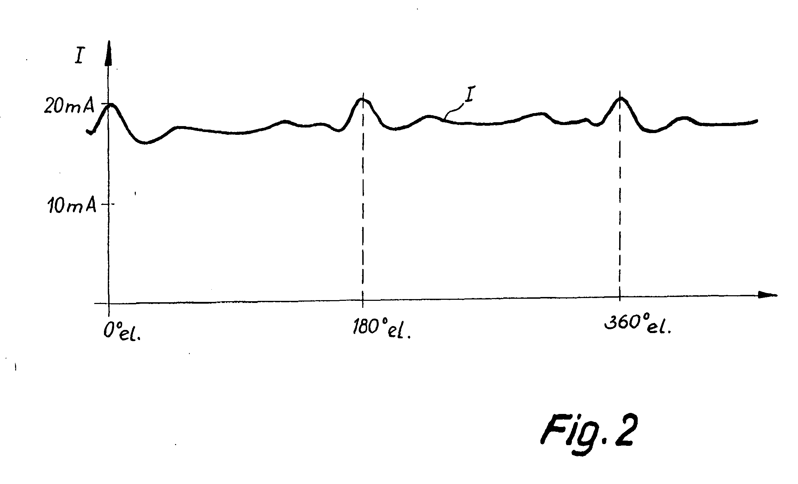

Wenn bei Erreichen der Betriebsdrehzahl der Strom I einen bestimmten Schwellwert iₜ überschreitet, wird der Strom I auf diesen Wert iₜ begrenzt, wobei der Schwellwert ein gewählter Arbeitspunkt des Motors ist, der z. B. dem Strom I entsprechen kann. Dadurch werden die Stromspitzen unterdrückt, die sonst kurz vor der Kommutierung auftreten würden, und es ergibt sich ein sehr konstanter Verlauf des Motorstroms I, wie in Fig. 2 dargestellt.

In Fig. 2 findet die Kommutierung bei den Rotorstellungen 0°el., 180°el. 360°el. etc. statt, und dort steigt der Strom nur geringfügig an, weil er durch das Leitendwerden des Transistors 80 sehr rasch und effektiv begrenzt wird. Hierdurch ergibt sich eine sehr starke Reduzierung der Motorgeräusche, was besonders bei kleinen Lüftern von großem Vorteil ist.

Im Prinzip arbeitet also die vorliegende Schaltung bei Erreichen der Betriebsdrehzahl ähnlich wie ein Konstantstromglied, d.h. der Motorstrom erhält mehr die Charakteristik eines Konstantstroms.

### Arbeitsweise

Beim Anlauf des Motors 10 ist der Kondensator 66 entladen, und deshalb sind die Transistoren 72 und 76 gesperrt. Durch das Rechtecksignal 26 werden die Transistoren 32, 40 alternierend leitend gesteuert, so daß von etwa 0° bis 180° el. der Strom i₁₂ und von etwa 180° bis 360° el. der Strom i₁₄ fließt, wobei auch die Stromspitzen 100, 102 entstehen, so daß beim Start kurzzeitig der Motor etwas lauter wird.

Wenn die Betriebsdrehzahl erreicht wird, wird die Spannung u_{C} so hoch, daß die Transistoren 72 und 76 leitend werden.

Wenn nämlich der Motorstrom I, z. B. im Bereich der Kommutierung, den Schwellwert iₜ überschreitet, wird der Transistor 80 kurzzeitig leitend. Erhält z.B. der Transistor 32 gerade einen Steuerstrom, so daß der Strom i₁₂ fließt, so fließt ein Teil dieses Steuerstroms über die Transistoren 76 und 80 zur Minusleitung 22, so daß der Strom i₁₂ entsprechend reduziert wird. Analoges gilt für den Transistor 40 und den Strom i₁₄.

Wenn die Drehzahl zu hoch wird, sinkt der Schwellwert iₜ, d.h. der Strom I wird auf einen niedrigeren Wert begrenzt.

Auf diese Weise erreicht man, daß beim Anlauf des Motors 10 der Strom I nicht begrenzt wird, was zu einem schnellen Hochlauf führt, daß aber bei Erreichen der gewünschten Drehzahl Stromspitzen unterdrückt werden, um die Motorgeräusche entsprechend zu reduzieren, wobei diese Unterdrückung gleichzeitig der Drehzahlbegrenzung dient.

Es hat sich gezeigt, daß man auf diese Weise gerade bei Motoren für kleine Lüfter die Motorgeräusche sehr stark reduzieren kann. Deshalb stellt dies eine bevorzugte Anwendung dar. Ein solcher Motor kann z.B. eine elektrische Leistung von 0,5 W aufnehmen.

Bei einem Ausführungsbeispiel ergaben sich folgende bevorzugte Werte (k = kOhm):

| | |
|---|---|
| Betriebsspannung | 13 V (9...16 V) |
| Hall-IC 18 | Allegro UUA 1027BF |
| Widerstände 28, 30, 48, 50, 86 | 10 k |
| Widerstände 64, 70, 74 | 200 k |
| Widerstand 88 | 1 k |
| Widerstand 90 | 2,2 k |
| Widerstand 36 | 10 Ohm |
| Dioden 60, 68 | BAS 216 |
| Kondensator 58 | 10 nF |
| Kondensator 66 | 100 nF |
| Kondensatoren 42, 44 | 47 nF |
| Transistoren 72, 76, 80, 92 | BC 847 C |
| (Transistor 92 ist als Diode geschaltet) | |
| Transistoren 32, 40 | BC 817-40 |

Naturgemäß sind im Rahmen der vorliegenden Ansprüche vielfache Abwandlungen und Modifikationen möglich.

## Patentansprüche

1. Elektronisch kommutierter Motor mit einer Anordnung (36, 80, 90) zur Erfassung von Werten des Motorstroms (I), welche einen vorgegebenen Schwellwert (it) überschreiten und zur Erzeugung eines ersten Signals bei Überschreiten dieses Schwellwerts, ferner mit einer Anordnung (58 bis 76) zur Erfassung von Drehzahlwerten, welche eine vorgegebene Drehzahl überschreiten und zur Erzeugung eines zweiten Signals bei Überschreiten der vorgegebenen Drehzahl, und mit einer Anordnung (76, 72, 80) zur Verknüpfung von erstem und zweitem Signal zum Erzeugen eines Verknüpfungssignals, welches im wesentlichen ohne zeitliche Verzögerung auf mindestens ein den Motorstrom (I) steuernde Halbleiter-Steuerglied (32, 40) einwirkt und während seiner Einwirkung diesen Motorstrom auf einen Wert verringert, der größer als Null ist,

2. Motor nach Anspruch 1, bei welchem der Strom zu mindestens einem Wicklungsstrang (12, 14) des Motors über einen Transistor (32, 40) steuerbar ist, und das Verknüpfungssignal dazu dient, bei seinem Auftreten den Basisstrom dieses Transistors (32, 40) herabzusetzen.

3. Motor nach Anspruch 2, bei welchem dem Transistor (32, 40) ein Millerkondensator (42, 44) zugeordnet ist, um bei der Kommutierung die Geschwindigkeit der Stromänderung in diesem Transistor zu reduzieren.

## Claims

1. Electronically commutated motor with an arrangement (36, 80, 90) to capture values of the motor current (I) which exceed a specified threshold value (it), and to generate a first signal if this threshold value is exceeded, also with an arrangement (58 to 76) to capture rotational speed values which exceed a specified rotational speed, and to generate a second signal if the specified rotational speed is exceeded, and with an arrangement (76, 72, 80) to combine the first and second signals to generate a combination signal, which essentially acts without time delay on at least one semiconductor control element (32, 40) which controls the motor current (I), and while it is acting reduces this motor current to a value which is greater than zero.

2. Motor according to Claim 1, wherein the current to at least one winding phase (12, 14) of the motor is controllable via a transistor (32, 40), and the combination signal is used to reduce the base current of this transistor (32, 40) when it occurs.

3. Motor according to Claim 2, wherein a Miller capacitor (42, 44) is assigned to the transistor (32, 40), to reduce the speed of the current change in this transistor during commutation.

## Revendications

1. Moteur à commutation électronique avec un dispositif (36, 80, 90) pour saisir des valeurs du courant de moteur (I) qui dépassent une valeur seuil (it) prédéfinie et pour générer un premier signal en cas de dépassement de cette valeur seuil, ainsi qu'avec un dispositif (58 à 76) pour saisir des valeurs de vitesse de rotation qui dépassent une vitesse de rotation prédéfinie et pour générer un deuxième signal en cas de dépassement de la vitesse de rotation prédéfinie, et avec un dispositif (76, 72, 80) pour combiner le premier et le deuxième signal en vue de générer un signal logique ou combiné qui agit sensiblement ou essentiellement sans retard dans le temps sur au moins un organe de commande à semi-conducteurs (32, 40) commandant le courant de moteur (I) et, pendant son action, diminue ce courant de moteur à une valeur qui est supérieure à zéro.

2. Moteur selon la revendication 1, dans lequel le courant vers au moins un enroulement (12, 14) du moteur peut être commandé par l'intermédiaire d'un transistor (32, 40), et le signal logique ou combiné sert, lors de sa survenue, à diminuer le courant de base de ce transistor (32, 40).

3. Moteur selon la revendication 2, dans lequel un condensateur de Miller (42, 44) est associé au transistor (32, 40) pour réduire la vitesse de la variation de courant dans ce transistor lors de la commutation.
